# EUROPÄISCHE PATENTANMELDUNG

(11) **EP 1 111 366 A2**
(43) Veröffentlichungstag der Anmeldung: **27.06.2001**
(21) Anmeldenummer: 00127258.2
(22) Anmeldetag: 18.12.2000
(51) Int. Cl.: G01N 3/06

(54) **Verfahren zur Überwachung des Kriechsverhaltens rotierender Komponenten einer Verdichter- oder Turbinenstufe**

(30) Priorität: 23.12.1999 DE 19962735
(71) Anmelder: ALSTOM (Schweiz) AG, 5400 Baden (CH)
(72) Erfinder: Pross, Jörg, 79774 Albbruck (DE)

(57) **Zusammenfassung**

Die vorliegende Erfindung betrifft ein Verfahren zur Überwachung des Kriechverhaltens rotierender Komponenten einer Verdichter- oder Turbinenstufe. Bei dem Verfahren wird zumindest ein Testelement (2) in einem Bereich der Verdichter- oder Turbinenstufe angebracht, in dem es einer vergleichbaren Betriebsbelastung wie die zu überwachende Komponente ausgesetzt ist. Das Testelement (2) wird nach einer vorgebbaren Betriebszeit der zu überwachenden Komponente untersucht. Schließlich wird aus dem Kriechverhalten des Testelementes das Kriechverhalten der zu überwachenden Komponente abgeleitet.
Das Verfahren ermöglicht die genaue Erfassung des Kriechverhaltens bzw. der Kriechschädigung der zu überwachenden Komponente während der Lebensdauer dieser Komponente.

## Beschreibung

### Technisches Gebiet

Die vorliegende Erfindung betrifft ein Verfahren zur Überwachung des Kriechverhaltens rotierender Komponenten einer Verdichter- oder Turbinenstufe, wie sie beispielsweise bei Gasturbinen eingesetzt werden. Die Rotoren und Laufschaufeln derartiger Stufen sind einer hohen mechanischen Belastung durch Zentrifugalkräfte sowie einer sehr hohen Temperatur ausgesetzt. Die Temperaturen liegen in der Regel oberhalb der Übergangstemperatur der Werkstoffe, so dass die zeitabhängige plastische Dehnung, das sogenannte Kriechen, einen wesentlichen die Lebensdauer der jeweiligen Komponenten begrenzenden Faktor darstellt.

Die Bestimmung des Kriechverhaltens bzw. der Restlebensdauer teurer Komponenten einer Turbine, wie Rotor und Laufschaufeln, ist daher eine wichtige Aufgabe beim Betrieb einer Anlage. Hierbei spielen auf der einen Seite Sicherheitsaspekte und auf der anderen Seite wirtschaftliche Aspekte eine große Rolle. So führt ein sehr später Austausch der Komponenten zu einem hohen Sicherheitsrisiko innerhalb der Anlage, ein zu früher Austausch der Komponenten verursacht unnötige Kosten. Die Überwachung und Abschätzung des Kriechverhaltens rotierender Komponenten in Verdichter- und Turbinenstufen sowie die korrekte Abschätzung der Restlebensdauer dieser Komponenten ist daher beim Betrieb einer derartigen Anlage sehr wichtig.

### Stand der Technik

Derzeit wird die Kriechlebensdauer von Turbinenkomponenten in der Regel über die Finite-Elemente-Methode (FEM) unter Verwendung viskoplastischer Materialmodelle ermittelt. Derartige Modelle erfordern jedoch die genaue Kenntnis der Materialkonstanten, Randbedingungen und Betriebsbedingungen, denen die Komponenten im Betrieb unterworfen werden. Die Genauigkeit der Vorhersagen dieser rechnerischen Modelle ist aufgrund der Unsicherheiten in der Angabe dieser Parameter sehr begrenzt. So können die externen Randbedingungen, insbesondere die Materialtemperaturen während des Betriebes nicht immer mit ausreichender Genauigkeit angegeben werden. Andererseits hat insbesondere die Materialtemperatur einen wesentlichen Einfluss auf die Ergebnisse. Ein weiterer Unsicherheitsfaktor besteht in den zur Verfügung stehenden Daten zum Kriechverhalten eines Materials. Die Werkstoffzusammensetzung bei der Herstellung der Komponenten ist Streuungen unterworfen, die wiederum zu unterschiedlichem Kriechverhalten des Materials der Komponente führen kann. Es ist aufgrund dieser Streuungen nicht möglich, die exakten Daten zum Kriechverhalten des Werkstoffes der gerade zu überwachenden Komponente zu kennen.

Schließlich ist die zeitliche Entwicklung einer Kriechschädigung auch von der jeweils vorangehenden zeitlichen Entwicklung der Kräftebelastung und Temperaturen, das heißt von der Vorgeschichte der Komponente abhängig. Eine genaue Vorhersage der Kriechlebensdauer einer im Betrieb eingesetzten Komponente würde daher eine Simulation der realen Betriebszyklen der Anlage erfordern. Dies ist jedoch aufgrund der Vielzahl der beteiligten Einflüsse, wie warme oder kalte Umgebungsbedingungen, transienter Betrieb usw., nahezu unmöglich. Die rein rechnerische Vorhersage der Kriechlebensdauer einer Komponente führt daher nicht zu zufriedenstellenden Ergebnissen.

Eine Verbesserung der Vorhersage kann erzielt werden, indem die Vorhersage anhand konkreter Messungen der Kriechschädigung der überwachten Komponente nach verschiedenen Betriebszeiten überprüft und evtl. durch Anpassung der Parameter korrigiert wird. Dies erfordert jedoch die Bestimmung des Kriechverhaltens bzw. der Kriechschädigung der Komponente mit zerstörungsfreien Prüfmethoden.

Derzeit sind allerdings keine zerstörungsfreien Prüfverfahren verfügbar, die zuverlässige Aussagen über die Kriechschädigung einer Komponente in einem frühen Betriebsstadium liefern könnten.

So ist zwar die sogenannte Replika-Technik bekannt, bei der aus einem Abdruck der Komponentenoberfläche oder von Teilen hiervon Schlussfolgerungen auf mikrostrukturelle Schädigungen gezogen werden können. Diese Schädigungen werden jedoch oft erst im sogenannten tertiären Kriechstadium erkannt, das heißt zu einem Zeitpunkt, zu dem die Turbinenkomponenten längst aus dem Verkehr gezogen sein sollten.

Eine weitere oft eingesetzte Technik zur Bestimmung der Kriechschädigung einer Komponente besteht in der Messung der Dimensionen der Komponente. Diese Dimension verändert sich aufgrund der Akkumulierung der inelastischen Dehnungen während der Betriebsdauer. Durch Vergleich der Dimensionsänderungen mit den rechnerischen Ergebnissen lassen sich auf diese Weise ebenfalls Korrekturen an den Rechenparametern vornehmen. Ein Nachteil dieser Technik besteht jedoch darin, dass sich damit nur globale Kriechschädigungen relativ großer Komponenten erfassen lassen, da die Dimensionsänderungen eine messbare Größe zeigen müssen. Dies erfordert entweder eine große akkumulierte Kriechdehnung oder eine entsprechend große Länge bzw. Dimension der Komponente.

Bei einer weiteren Technik wird nach einer bestimmten Betriebszeit von der Komponente Probematerial entnommen und untersucht. Dieses Probematerial kann jedoch nur von Stellen entnommen werden, die keinen Einfluss auf das weitere Betriebsverhalten der Komponente haben. Dies sind Bereiche mit niedrigen oder ohne nennenswerte Spannungen, so dass dieses Testmaterial zwar den gleichen Temperaturen wie die Komponente ausgesetzt war, aber keinen für die Lebensdauer relevanten Belastungen unterworfen wurde. An solchen Proben kann daher kaum eine Kriechschädigung nachgewiesen werden, so dass diese Technik nur in sehr begrenztem Umfang Informationen zur Korrektur der rechnerischen Modelle liefert.

Weitere zerstörungsfreie Prüfverfahren, wie sie in anderen technischen Bereichen eingesetzt werden, liefern derzeit ebenfalls noch keine zufriedenstellenden Ergebnisse zur Bewertung der Kriechschädigungen. So können mit Ultraschall oder magnetischen Verfahren Diskontinuitäten im Material erfasst werden. Eine Aussage über die Kriechschädigungen bzw. das weitere Verhalten erfordert jedoch auch hier wiederum den Einsatz neuer Rechnermodelle, wie sie beispielsweise in der US 5,140,528 vorgeschlagen werden.

Zusammenfassend gibt es bisher kein zufriedenstellendes Verfahren zur Überwachung oder Bestimmung der Rest-Kriechlebensdauer einer rotierenden Komponente einer Turbinen- oder Verdichterstufe.

### Darstellung der Erfindung

Ausgehend von diesem Stand der Technik liegt der Erfindung die Aufgabe zugrunde, ein Verfahren zur Überwachung des Kriechverhaltens rotierender Komponenten einer Verdichter- oder Turbinenstufe anzugeben, mit dem das Kriechverhalten bzw. die Kriechschädigung der zu überwachenden Komponente mit höherer Genauigkeit als bisher erfasst werden kann. Das Verfahren soll es insbesondere ermöglichen, die Kriechschädigung zu verschiedenen Zeiten während der Lebensdauer der Komponente zu erfassen.

Die Aufgabe wird mit dem Verfahren nach Anspruch 1 gelöst. Vorteilhafte Ausgestaltungen des Verfahrens sind Gegenstand der Unteransprüche.

Beim erfindungsgemäßen Verfahren wird zumindest ein Testelement in einem Bereich der Verdichter- oder Turbinenstufe angebracht, in dem es einer vergleichbaren Betriebsbelastung wie die zu überwachende Komponente ausgesetzt ist. Unter Betriebsbelastung sind hierbei insbesondere die auf die Komponente einwirkenden Kräfte, beispielsweise die Zentrifugalkraft, sowie die Temperaturen zu verstehen, denen die Komponente während des Betriebs ausgesetzt ist. Nach einer vorgebbaren Betriebszeit der zu überwachenden Komponente wird das Kriechverhalten des Testelementes untersucht. Aus dem auf diese Weise bestimmten Kriechverhalten bzw. der Kriechschädigung des Testelementes wird das Kriechverhalten bzw. die Kriechschädigung der zu überwachenden Komponente abgeleitet. Diese Daten können anschließend mit einem rechnerischen Modell verglichen werden, so dass die Parameter des Modells entsprechend korrigiert werden können.

Es versteht sich von selbst, dass das Testelement derart in der Turbinen- oder Verdichterstufe angebracht wird, dass es deren Betrieb und Funktionsweise nicht beeinträchtigt. Hierfür ist es einerseits erforderlich, das Testelement mit entsprechend geringem Gewicht vorzusehen und andererseits an einer Stelle, an der es die Strömungsverhältnisse innerhalb der Turbinen- oder Verdichterstufe nicht stört.

Die ein oder mehreren Testelemente sind während des Betriebes der Komponente den gleichen Betriebszyklen ausgesetzt wie die Komponente selbst. Die Testelemente werden hierbei in einer geeigneten Form bereitgestellt, die es ermöglicht, dass sie vergleichbaren Kräften ausgesetzt sind, wie die Komponente selbst. Dies kann hinsichtlich der Belastung durch Zentrifugalkräfte durch eine längliche Form des Testelementes erreicht werden, indem dieses mit einem Ende am rotierenden Körper, beispielsweise dem Rotor, angebracht wird. Die auf das Testelement einwirkenden Zentrifugalkräfte können hierbei durch die Form des Testelementes vorgegeben werden.

Weiterhin sollte durch geeignete Verbindung des Testelementes mit den Bestandteilen der Turbinen- oder Verdichterstufe sichergestellt werden, dass eine Kriechschädigung des Testelementes sich nicht auf Teile der Turbinen- oder Verdichterstufe übertragen kann.

Das erfindungsgemäße Verfahren bietet den Vorteil, dass die zu überwachende Komponente und das bzw. die Testelement(e) unter den gleichen Temperaturbedingungen betrieben werden. Die Unsicherheiten, wie sie bei Einsatz rechnerischer Modelle hinsichtlich der Temperaturparameter zur Bestimmung der Kriechschädigung einer Komponente auftreten, können mit dem vorliegenden Verfahren vermieden werden. Weiterhin können die Testelemente genau auf die jeweilige Untersuchungsmethode abgestimmt werden, die eingesetzt wird, um eine messbare Kriechschädigung zu erfassen. Die zu überwachende Komponente muss bei diesem Verfahren nicht untersucht werden. Die Unsicherheiten in den realen Betriebsbedingungen werden ausgeschlossen, so dass genauere Ergebnisse erzielt werden können als dies mit den bisher bekannten Verfahren möglich ist. Diese Ergebnisse können wiederum zur Korrektur einer parallel durchgeführten Modellrechnung zur Bestimmung der Rest-Kriechlebensdauer der Komponente dienen.

In einer bevorzugten Ausführungsform des erfindungsgemäßen Verfahrens wird das Testelement aus der gleichen Werkstoff-Charge gefertigt, aus dem die zu überwachende Komponente gefertigt wurde. Hierdurch können gerade die oben angeführten Streuungen in den Werkstoffen und die damit zusammenhängenden Unsicherheiten in den Materialparametern ausgeschlossen werden. Die Testelemente werden bei dieser Ausführungsform daher vorzugsweise zur gleichen Zeit gefertigt wie die Komponenten selbst.

Das oder die Testelemente können auch aus einem Werkstoff gefertigt werden, der ein im Vergleich zum Werkstoff der Komponente stärkeres Kriechverhalten aufweist. Hierdurch lassen sich eventuelle Schädigungen schneller erkennen. Voraussetzung für diese Ausführungsform ist jedoch, dass ein konkreter Zusammenhang zwischen dem Kriechverhalten des Materials des Testelementes und dem Kriechverhalten des Materials der zu überwachenden Komponente sichergestellt und bekannt ist.

Das Testelement ist vorzugsweise direkt an der zu überwachenden Komponente, wie beispielsweise dem Rotor oder der Schaufel, befestigt. So kann das Testelement integral mit dieser Komponente gefertigt werden. Dies hat den Vorteil, dass Komponente und Testelement aus dem exakt gleichen Material bestehen. Weiterhin wird ein zusätzlicher Verfahrensschritt des Anbringens des Testelementes an die Komponente vermieden.

Soll das Testelement allerdings erst nach Herstellung der Komponente angebracht werden, so geschieht dies vorzugsweise mit einem Schweißverfahren. Hierbei muss jedoch darauf geachtet werden, dass die durch das Schweißen erzeugten Wiederaufschmelzzonen weder die zu untersuchenden Bereiche des Testelementes noch die Komponente selbst beeinträchtigen. Auch beim nachträglichen Anbringen des Testelementes werden die besten Ergebnisse erzielt, wenn dieses aus der gleichen Werkstoff-Charge gefertigt wird wie die zu überwachende Komponente. Neben dem Schweißen sind selbstverständlich auch andere Verfahren zum Verbinden des Testelementes mit Bauteilen der Turbinen- oder Verdichterstufe möglich. Die Art der Verbindung hängt hierbei insbesondere von den zu tragenden Belastungen der Verbindungsnaht ab. Das Testelement muss auch nicht direkt an der zu überwachenden Komponente befestigt werden, sondern kann auch an benachbarten Bauteilen vorgesehen sein. So könnte zur Überwachung des Kriechverhaltens einer Laufschaufel das Testelement auch am Rotor befestigt werden, beispielsweise durch mechanische Verhängung in einer Umfangsnut am Rotor.

Für die Untersuchung des Testelementes hinsichtlich der Kriechschädigung bzw. des Kriechverhaltens bestehen verschiedene Möglichkeiten. So könnte das Testelement in den Dimensionen vermessen werden, um beispielsweise eine Längenänderung nachweisen zu können. Die Form des Testelementes wird in diesem Fall so gewählt, dass sich Dimensionsänderungen leicht nachweisen lassen. So wird als Testelement vorzugsweise ein Element mit einer langgestreckten flachen Form und einem verjüngten Abschnitt eingesetzt. Eine Dimensionsänderung kann hierbei über das Verhältnis der Breite der Enden zum verjüngten Abschnitt leicht erfasst werden.

In einer weiteren bevorzugten Ausführungsform wird das Testelement von Anfang an mit einem künstlichen Riss versehen, dessen Veränderung, insbesondere Verlängerung, Aufweitung oder Instabilität, überwacht werden. Aus der Beobachtung des Verhaltens dieses Risses können Kennwerte für die Modelle der zugrundeliegenden Bruchmechanik gewonnen werden.

Es versteht sich von selbst, dass die Untersuchung des bzw. der Testelemente in der Praxis nicht nur einmalig nach einer bestimmten Betriebszeit, sondern zu unterschiedlichen Betriebszeiten erfolgt, um auf diese Weise die zeitliche Entwicklung der Materialbeanspruchung erfassen zu können. Bei jeder Erfassung werden aus dem Verhalten des Testelementes das Verhalten der zu überwachenden Komponente abgeleitet und vorzugsweise entsprechende gleichzeitig vorgenommene Computersimulationen mit den neu gewonnenen Daten abgeglichen bzw. korrigiert.

In einer weiteren bevorzugten Ausführungsform werden nicht nur ein einzelnes Testelement sondern mehrere Testelemente zur Überwachung der Komponente eingesetzt. Dies ermöglicht eine noch detailliertere Untersuchung der Kriechschädigungen der zu überwachenden Komponente. Hierbei wird jeweils nach einer bestimmten Betriebszeit ein Testelement aus der Turbinen- und Verdichterstufe entfernt. Dieses Testelement kann anschließend beliebigen Werkstoffprüfungen unterzogen werden. Hierbei kommen insbesondere metallographische Prüfverfahren zur Untersuchung einer Veränderung des Gefüges, eine direkte Messung der verbleibenden Lebensdauer durch entsprechende mechanische Beanspruchung, die Überprüfung der Dehnungsgrenze durch eine Zugbelastung oder ähnliches in Frage. Aus diesen Daten können wiederum die Parameter einer Modellrechnung zur Bestimmung der Kriechlebensdauer angepasst werden.

Durch Vorsehen mehrerer Testelemente kann auf diese Weise bei jeder Inspektion der Anlage ein Testelement abgetrennt und untersucht werden. Selbstverständlich ist es auch möglich, bei jeder Inspektion mehrere Testelemente gleichzeitig abzutrennen und unterschiedlichen Untersuchungen zuzuführen. Vorteilhaft ist in diesem Zusammenhang auch, wenn Testelemente mit unterschiedlicher Ausgestaltung, das heißt unterschiedlicher Form und unterschiedlichen Materialeigenschaften eingesetzt werden, die jeweils auf die durchzuführende Untersuchungsmethode abgestimmt sind. Hierbei können bei einer Inspektion zusätzliche Daten gewonnen werden.

### Kurze Beschreibung der Erfindung

Die Erfindung wird nachfolgend anhand eines Ausführungsbeispieles in Verbindung mit den Zeichnungen ohne Beschränkung des allgemeinen Erfindungsgedankens nochmals erläutert. Hierbei zeigen:
- Figur 1:: ein Beispiel für die Ausgestaltung eines Testelementes und dessen Anbringung an eine zu überwachende Rotorscheibe;
- Figur 2:: die Darstellung aus Figur 1 in Seitenansicht; und
- Figur 3:: ein Beispiel für die mechanische Verhängung eines Testelementes am Rotor.

### Wege zur Ausführung der Erfindung

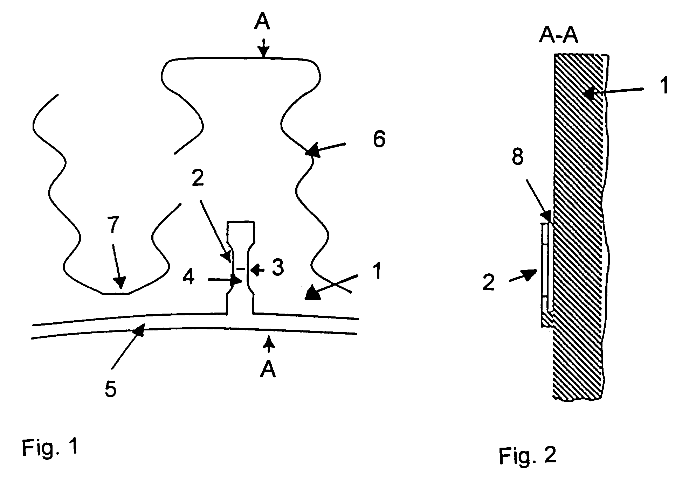

Im folgenden Ausführungsbeispiel soll die Rotorscheibe einer Turbinenstufe hinsichtlich des Kriechverhaltens überwacht werden. Figur 1 zeigt hierbei die Rotorscheibe 1 mit dem daran befestigten Testelement 2. Das Testelement hat in diesem Beispiel eine langgestreckte flache Form mit einem verjüngten Abschnitt 4. Das Testelement ist an einem an der Seitenfläche des Rotors hervorstehenden umlaufenden Ring 5 an einem Ende befestigt.

Im vorliegendem Fall ist das Testelement vor dem Befestigungszapfen 6 für die axialen Laufschaufeln angeordnet. Zwischen zwei Befestigungszapfen ist die Schaufelvertiefung 7 zu erkennen. Der umlaufende Ring ist integral mit dem Rotor gefertigt. Das Testelement kann nachträglich an dem Ring befestigt, beispielsweise angeschweißt werden. Es läßt sich jedoch auch direkt integral mit der Rotorscheibe herstellen. Hierbei kann ein zwischen der Rotorscheibe und dem Testelement erforderlicher schmaler Spalt 8 durch ein Erodierverfahren herausgearbeitet werden.

Die Trennung zwischen dem Testelement und der Seitenfläche der Rotorscheibe 1 über den Spalt 8 ist erforderlich, um einerseits sicherzustellen, dass das Testelement durch seine eigene Masse der Zentrifugalkraft unterworfen und nicht durch die Rotorscheibe unterstützt wird. Zum anderen verhindert dieser Spalt 8, dass sich eine Schädigung des Testelementes in der Rotorscheibe fortsetzt. Der Spalt 8 ist in Figur 2, die einen Schnitt entlang der Linie A-A der Figur 1 darstellt, deutlich zu erkennen.

Durch die Form des Testelementes 2 mit dem verjüngten Abschnitt 4 kann über das Verhältnis zwischen den breiteren Enden und dem verjüngten Abschnitt die Belastung des Testelementes gut kontrolliert werden. In diesem Beispiel wurde das Testelement von Anfang an mit einem künstlichen Riss 3 versehen, dessen Entwicklung bzw. Ausdehnung bei jeder Inspektion des Rotors 1 erfasst werden kann. Die Ausgestaltung dieses Risses ist hierbei vorzugsweise so gewählt, dass das in theoretischen Modellen der Bruchmechanik auftretende C*-Integral, das das viskoplastische Spannungsfeld an der Rissspitze beschreibt, ohne großen Aufwand berechnet werden kann. Anhand der bei jeder Inspektion erfassten Daten, kann diese Berechnung durch Korrektur der Parameter verfeinert werden. Das Testelement kann zur Sicherstellung ebener Spannungsbedingungen sehr dünn ausgestaltet werden, so dass dessen Anbringung kaum zusätzlichen Raum erfordert.

Weiterhin kann durch diese flache Ausgestaltung die durch das Testelement hervorgerufene zusätzliche Belastung des Rotors, wie auch eine eventuelle dadurch verursachte Unwucht, vernachlässigt werden. Die mögliche Unwucht kann auch dadurch verhindert werden, dass mehrere Testelemente in gleicher Verteilung entlang des umlaufenden Ringes an der Rotorscheibe befestigt werden. Durch Vorsehen mehrerer Testelemente können gleichzeitig zusätzliche Informationen über das Werkstoffverhalten gewonnen werden.

Das erfindungsgemäße Verfahren lässt sich bei allen rotierenden Komponenten von Verdichter- und Turbinenstufen einsetzen. Die Dimensionen des Testelementes, das im vorliegenden Beispiel eine Breite von etwa 10 - 15 mm sowie eine Länge von etwa 20 - 40 mm aufweist, hängen von den Größenverhältnissen der jeweiligen Komponenten ab und können vom Fachmann jederzeit geeignet gewählt werden. Das gleiche gilt für die Form des Testelementes sowie den Ort der Anbringung.

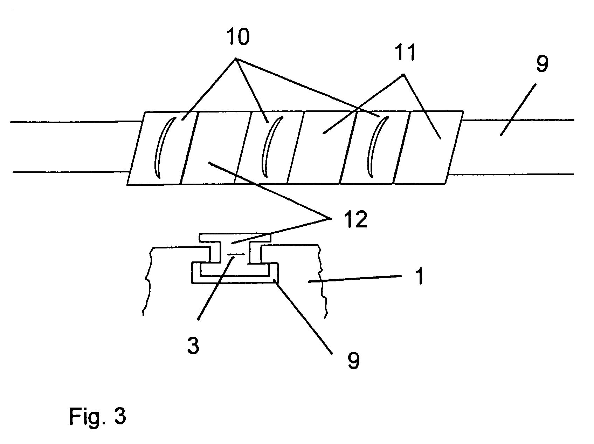

Figur 3 zeigt schließlich ein weiteres Beispiel für die Anbringung eines Testelementes an einer Rotorscheibe 1. Die Rotorscheibe weist hierbei eine Umfangsnut 9 auf, in die die Laufschaufeln 10 eingehängt werden. Zwischen den Laufschaufeln einer Schaufelreihe sind jeweils Zwischenstücke 11 eingebracht. In diesem Beispiel ist das Testelement als Zwischenstück 12 ausgestaltet und anstelle eines regulären Zwischenstückes 11 in die Schaufelreihe eingehängt. Der obere Teil der Figur zeigt hierbei die Anordnung in Draufsicht, der untere Teil einen Schnitt durch die Umfangsnut 9 an der Position des Testelementes 12. Das als Zwischenstück ausgeführte Testelement 12 wird hierbei in gleicher Weise wie die regulären Zwischenstücke 11 mechanisch in der Umfangsnut 9 verhängt. Im unteren Teil der Figur ist auch der künstliche Anriss 3 zu erkennen, mit dem das Testelement 12 in diesem Beispiel versehen ist.

Das Testelement 12 kann aus einem anderen oder dem gleichen Material wie die übrigen Schaufeln und Zwischenstücke bestehen. Durch geeignete Wahl des Materials für das Testelement kann entweder das Kriechverhalten der Schaufelreihe oder das des Rotors überwacht werden.

### Bezugszeichenliste

- 1: Rotorscheibe
- 2: Testelement
- 3: Künstlicher Riss
- 4: Verjüngter Abschnitt
- 5: Umlaufender Ring
- 6: Befestigungszapfen (Tannenbaumfußbefestigung)
- 7: Schaufelvertiefung (Schaufelnut)
- 8: Spalt
- 9: Umfangsnut
- 10: Laufschaufeln mit Schaufelblatt
- 11: Zwischenstücke (regulär)
- 12: Zwischenstück als Testelement

## Patentansprüche

1. Verfahren zur Überwachung des Kriechverhaltens rotierender Komponenten einer Verdichter- oder Turbinenstufe mit folgenden Schritten:
- Anbringen zumindest eines Testelementes (2) in einem Bereich der Verdichter- oder Turbinenstufe, in dem es einer vergleichbaren Betriebsbelastung wie die zu überwachende Komponente (1) ausgesetzt ist;
- Untersuchen des Kriechverhaltens des Testelementes (2) nach einer vorgebbaren Betriebszeit der zu überwachenden Komponente (1); und
- Ableiten des Kriechverhaltens der zu überwachenden Komponente (1) aus dem Kriechverhalten des Testelementes (2).

2. Verfahren nach Anspruch 1,
dadurch gekennzeichnet,
daß das Testelement (2) aus der gleichen Werkstoff-Charge gefertigt wird, aus dem die zu überwachende Komponente (1) gefertigt wurde.

3. Verfahren nach Anspruch 1,
dadurch gekennzeichnet,
daß das Testelement (2) aus einem Werkstoff gefertigt wird, der ein stärkeres Kriechverhalten wie das Material der zu überwachenden Komponente (1) aufweist.

4. Verfahren nach einem der Ansprüche 1 bis 3,
dadurch gekennzeichnet,
daß das Testelement (2) mit einem künstlichen Riss (3) versehen wird, aus dessen Entwicklung das Kriechverhalten der zu überwachenden Komponente (1) abgeleitet wird.

5. Verfahren nach einem der Ansprüche 1 bis 4,
dadurch gekennzeichnet,
daß das Testelement (2) eine langgesteckte flache Form mit einem verjüngten Abschnitt aufweist.

6. Verfahren nach einem der Ansprüche 1 bis 5,
dadurch gekennzeichnet,
daß das Testelement (2) an der zu überwachenden Komponente (1) angebracht wird.

7. Verfahren nach Anspruch 6,
dadurch gekennzeichnet,
daß das Anbringen des Testelementes (2) bei der Herstellung der zu überwachenden Komponente (1) erfolgt, indem es integral mit dieser gefertigt wird.

8. Verfahren nach einem der Ansprüche 1 bis 6,
dadurch gekennzeichnet,
daß das Anbringen des Testelementes (2) durch ein Schweißverfahren erfolgt.

9. Verfahren nach einem der Ansprüche 1 bis 6,
dadurch gekennzeichnet,
daß das Anbringen des Testelementes (2) durch mechanische Verhängung erfolgt.

10. Verfahren nach einem der Ansprüche 1 bis 9,
dadurch gekennzeichnet,
daß das Untersuchen des Kriechverhaltens des Testelementes (2) durch Vermessung einer Dimensionsänderung des Testelementes erfolgt.

11. Verfahren nach einem der Ansprüche 1 bis 10,
dadurch gekennzeichnet,
daß das Untersuchen des Kriechverhaltens des Testelementes (2) durch Abtrennen des Testelementes von der zu überwachenden Komponente (1) und anschließende zerstörende Prüfung des Testelementes (2) erfolgt.

12. Verfahren nach einem der Ansprüche 1 bis 11,
dadurch gekennzeichnet,
daß das Testelement (2) derart ausgestaltet wird, daß es bei Überschreitung eines vorgebbaren Kriechbereiches zerstört wird.

13. Verfahren nach einem der Ansprüche 1 bis 12,
dadurch gekennzeichnet,
daß mehrere Testelemente (2) an die zu überwachende Komponente (1) angebracht und einer Untersuchung unterworfen werden.

14. Verfahren nach Anspruch 13,
dadurch gekennzeichnet,
daß zumindest einige der Testelemente (2) nach jeweils einer unterschiedlichen Betriebszeit der zu überwachenden Komponente (1) untersucht werden.

15. Verfahren nach Verfahren nach Anspruch 13,
dadurch gekennzeichnet,
daß sich die Testelemente (2) in der geometrischen Form und/oder dem Material unterscheiden.

16. Verfahren nach Verfahren nach Anspruch 15,
dadurch gekennzeichnet,
daß die Testelemente (2) nach der gleichen Betriebszeit der zu überwachenden Komponente (1) untersucht werden.
